# EUROPÄISCHE PATENTSCHRIFT

(11) **EP 2 655 549 B1**
(45) Veröffentlichungstag und Bekanntmachung des Hinweises auf die Patenterteilung: **24.10.2018**
(21) Anmeldenummer: 11808593.5
(22) Anmeldetag: 21.12.2011
(51) Int. Cl.: C09K 11/77, B41M 3/14, B42D 15/00, D21H 21/48, G07D 7/12, B42D 25/29, G07D 7/1205

(54) **SICHERHEITSMERKMAL**
SECURITY FEATURE
CARACTÉRISTIQUES DE SÉCURITÉ

(30) Priorität: 23.12.2010 DE 102010055976
(43) Veröffentlichungstag der Anmeldung: 30.10.2013
(73) Patentinhaber: Giesecke+Devrient Currency Technology GmbH, 81677 München (DE)
(72) Erfinder: KECHT, Johann, 81677 München (DE); STOCK, Kai Uwe, 82031 Grünwald (DE)
(86) Internationale Anmeldenummer: PCT/EP2011/006489
(87) Internationale Veröffentlichungsnummer: WO 2012/084239

(56) Entgegenhaltungen:
- WO-A1-2011/002960
- WO-A1-2012/003854
- US-A- 4 452 843
- US-A1- 2007 096 057
- US-A1- 2009 267 027
- US-A1- 2010 163 747
- US-B1- 6 383 618
- US-B1- 6 802 992

## Beschreibung

Die Erfindung betrifft ein Sicherheitsmerkmal und ein Verfahren zur Prüfung des Sicherheitsmerkmals. Derartige Sicherheitsmerkmale werden zur Absicherung von Wertdokumenten eingesetzt, insbesondere zur Echtheitssicherung der Wertdokumente.

Zur Absicherung von Wertdokumenten werden diese mit Sicherheitsmerkmalen und/oder mit Sicherheitsmerkmale aufweisenden Sicherheitselementen ausgestattet, um eine Überprüfung der Echtheit des Wertdokuments zu ermöglichen. Die Sicherheitsmerkmale und Sicherheitselemente dienen zum Schutz vor unerlaubter Reproduktion der Wertdokumente. Als Sicherheitselemente werden beispielsweise Sicherheitsfäden oder Folienelemente eingesetzt, die mit einem Wertdokument verbunden werden. Die Sicherheitsmerkmale können mit dem Substrat des Sicherheitselements oder mit dem Substrat des Wertdokuments selbst verbunden werden.

Als Sicherheitsmerkmal werden beispielsweise Lumineszenzpigmente verwendet, die aus einem mit einem Luminophor dotierten Wirtsgitter bestehen. Optische Übergänge des Luminophors führen zu einer Lumineszenz des Lumineszenzpigments. Zur Echtheitsprüfung eines Wertdokuments, welches das Lumineszenzpigment aufweist, wird zum Beispiel überprüft, ob das Wertdokument die gewünschte Lumineszenz hat und in Abhängigkeit davon entschieden, ob das Wertdokument echt ist oder nicht.

Aus dem Stand der Technik sind verbesserte Sicherheitsmerkmale mit höherer Leuchtstärke bekannt, bei denen das Lumineszenzpigment nicht nur mit einem Luminophor, sondern zusätzlich mit einem Aktivator dotiert ist, der eine erhöhte Lumineszenzintensität ermöglicht. Insbesondere ermöglicht der Aktivator die Anregung des Luminophors in Wellenlängenbereichen, in denen der Luminophor gewöhnlicherweise nicht oder nur schlecht anregbar ist. Der Aktivator und der Luminophor sind dabei so gewählt, dass der Aktivator zu einer vollständigen Übertragung seiner Anregungsenergie auf den Luminophor neigt. Der Aktivator wird durch entsprechende Lichteinstrahlung selektiv optisch angeregt und überträgt seine Anregungsenergie anschließend vollständig auf den Emitter, der anschließend eine für ihn charakteristische Lumineszenz emittiert. Anhand dieser kann die Echtheit des Wertdokuments geprüft werden. Der Aktivator selbst zeigt dagegen keine Lumineszenz.

Um eine Nachahmung der Wertdokumente zu erschweren, ist es außerdem bekannt, diese mit einem Sicherheitsmerkmal zu versehen, das ein komplexeres charakteristisches Lumineszenzspektrum aufweist. Um mehrere Lumineszenzpeaks zu erhalten, werden verschiedene Lumineszenzpigmente, die jeweils nur einen Luminophor enthalten, miteinander vermischt. Für Sicherheitsanwendungen geeignete Lumineszenzpigmente, insbesondere ausschließlich im infraroten Spektralbereich lumineszierende Lumineszenzpigmente, die mit zwei oder mehr gleichzeitig lumineszierenden Luminophoren dotiert sind, sind dagegen kommerziell nicht erhältlich. Das Vermischen verschiedener Lumineszenzpigmente hat den Nachteil, dass sich die verschiedenen Lumineszenzpigmente der Mischung, z.B. aufgrund verschiedener Korngrößen oder verschiedener Dichte, wieder entmischen können. Eine solche Entmischung der Lumineszenzpigmente eines Sicherheitsmerkmals kann insbesondere aufgrund von Erschütterungen beim Transportieren des Sicherheitsmerkmals stattfinden oder auch bei der Verarbeitung des Sicherheitsmerkmals zum Aufbringen auf das Wertdokument. Durch das Entmischen ergibt sich eine Inhomogenität der Pigmentmischung, die zu unbeabsichtigten räumlichen Variationen der Lumineszenz des Sicherheitsmerkmals auf dem Wertdokument führen kann. Solche Variationen können zu einer Fehlbeurteilung echter Wertdokumente führen bzw. die Erkennung von Fälschungen erschweren, die eine von der echten Lumineszenz abweichende aber ähnliche Lumineszenz zeigen. Bei einem solchen Sicherheitsmerkmal, das aus einer Mischung mehrerer Lumineszenzpigmente besteht, kann eine Homogenität der Pigmentmischung üblicherweise nur mit großem Aufwand erreicht werden.

Das Dokument US 2010/163747 A1 offenbart Materialien, die mit zwei verschiedenen Luminophoren dotiert sind, die im IR-Bereich emittieren.

Eine Aufgabe der vorliegenden Erfindung ist es daher, ein Sicherheitsmerkmal anzugeben, das eine zuverlässigere Unterscheidung zwischen echten und falschen Wertdokumenten ermöglicht.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Das erfindungsgemäße Sicherheitsmerkmal umfasst ein Lumineszenzpigment, das ein mit einem ersten Luminophor und mit einem zweiten Luminophor dotiertes Wirtsgitter aufweist. Dabei ist mindestens ein Volumenbereich des Wirtsgitters sowohl mit dem ersten als auch mit dem zweiten Luminophor dotiert. Das Lumineszenzpigment kann durch eine optische Anregung zur Emission von Lumineszenzlicht angeregt werden. Durch die optische Anregung des Lumineszenzpigments wird, mittelbar oder unmittelbar, eine Anregungsenergie des ersten Luminophors erzeugt. Die Bestandteile des Lumineszenzpigments, insbesondere das Wirtsgitter und der erste und zweite Luminophor, sind derart gewählt, dass eine Anregungsenergie des ersten Luminophors auf den zweiten Luminophor übertragbar ist. Die durch optische Anregung des Lumineszenzpigments erzeugte Anregungsenergie des ersten Luminophors kann daher, durch eine Wechselwirkung zwischen dem ersten und dem zweiten Luminophor, von dem ersten auf den zweiten Luminophor übertragen werden. Die Anregungsenergie wird bei dem erfindungsgemäßen Lumineszenzpigment jedoch nicht vollständig von dem ersten auf den zweiten Luminophor übertragen, wie es bei bisher bekannten Lumineszenzpigmenten mit Energieübertragung der Fall ist, sondern nur teilweise, d.h. nur mit einer im Vergleich zu den bekannten Lumineszenzpigmenten deutlich reduzierten Wahrscheinlichkeit. Das von dem erfindungsgemäßen Lumineszenzpigment emittierte Lumineszenzlicht enthält neben einem Lumineszenzpeak des zweiten Luminophors, auch einen Lumineszenzpeak des ersten Luminophors. Bei den bekannten Lumineszenzpigmenten führt die vollständige Übertragung der Anregungsenergie von dem ersten auf den zweiten Luminophor dazu, dass als Folge einer optischen Anregung des Lumineszenzpigments ausschließlich eine Lumineszenz des zweiten Luminophors emittiert wird, während der erste Luminophor überhaupt keine Lumineszenz emittiert.

Bei dem erfindungsgemäßen Lumineszenzpigment wird eine teilweise, d.h. eine unvollständige Übertragung der Anregungsenergie dadurch erreicht, dass die Stoffmengenanteile des ersten und des zweiten Luminophors an dem Lumineszenzpigment geeignet gewählt werden. Bei bestimmten Lumineszenzpigmenten und bestimmten Stoffmengenanteilen, die sich empirisch ermitteln lassen, kann gezielt eine reduzierte Wahrscheinlichkeit für die Übertragung der Anregungsenergie von dem ersten auf den zweiten Luminophor eingestellt werden. Zum Beispiel werden die Stoffmengenanteile des zweiten Luminophors gezielt so gering gewählt, dass die Wahrscheinlichkeit für die Übertragung der Anregungsenergie von dem ersten auf den zweiten Luminophor reduziert wird. Diese reduzierte Wahrscheinlichkeit für die Energieübertragung wirkt sich auf das emittierte Lumineszenzlicht so aus, dass dieses, neben einem Lumineszenzpeak des zweiten Luminophors, auch einen Lumineszenzpeak des ersten Luminophors aufweist. Die Stoffmengenanteile des ersten und zweiten Luminophors an dem Lumineszenzpigment sind bei dem erfindungsgemäßen Lumineszenzpigment derart gewählt, dass das Lumineszenzlicht des Lumineszenzpigments ein Lumineszenzspektrum mit einem durch den ersten Luminophor emittierten ersten Lumineszenzpeak und mit einem durch den zweiten Luminophor emittierten zweiten Lumineszenzpeak aufweist, wobei die Peakintensität des zweiten Lumineszenzpeaks an der Summe der Peakintensität des ersten und zweiten Lumineszenzpeaks einen Anteil von mindestens 20% und höchstens 80% hat. Sowohl der erste als auch der zweite Lumineszenzpeak heben sich demzufolge jeweils deutlich vom spektralen Untergrund des Lumineszenzspektrums ab. Das Lumineszenzpigment ist aufgrund dieser Eigenschaften besonders für den Einsatz für ein Sicherheitsmerkmal zur Absicherung von Wertdokumenten geeignet.

Bevorzugt sind die Stoffmengenanteile des ersten und des zweiten Luminophors an dem Lumineszenzpigment derart gewählt, dass der Anteil der Peakintensität des zweiten Lumineszenzpeaks an der Summe der Peakintensität des ersten und zweiten Lumineszenzpeaks mindestens 30% und höchstens 70%, insbesondere mindestens 40% und höchstens 60% beträgt. Dadurch wird eine verbesserte Nachweisbarkeit des intensitätsschwächeren der beiden Lumineszenzpeaks erreicht.

Der erste und zweite Lumineszenzpeak weisen vorzugsweise ein intrinsisch durch die Zusammensetzung des Lumineszenzpigments festgelegtes Intensitätsverhältnis zueinander auf. Das Intensitätsverhältnis bleibt daher von vielen äußeren Einwirkungen auf das Sicherheitsmerkmal unbeeinflusst. Im Gegensatz zu den eingangs erwähnten Sicherheitsmerkmalen aus einer Lumineszenzpigmentmischung, die das Problem der Entmischung und der damit verbundenen Veränderung des Lumineszenzspektrums haben, ist das erfindungsgemäße Sicherheitsmerkmal, aufgrund des intrinsisch festgelegten Verhältnisses der beiden Peakintensitäten, unempfindlicher gegenüber äußeren Einwirkungen auf das Sicherheitsmerkmal. Auch bei der Verarbeitung des Sicherheitsmerkmals, zum Verbinden desselben mit dem Wertdokument, bleibt das Lumineszenzspektrum des Sicherheitsmerkmals gleich. Aufgrund des intrinsisch festgelegten Intensitätsverhältnisses ist es daher möglich, ungewünschte räumliche Variationen der Lumineszenz auf einem Wertdokument zu vermeiden und, sofern gewünscht, mit geringem Aufwand eine räumlich homogene Lumineszenz des Wertdokuments zu erreichen. Das erfindungsgemäße Sicherheitsmerkmal ist auch vorteilhaft im Vergleich zu bisherigen Sicherheitsmerkmalen, die räumlich getrennte Lumineszenzbereiche aufweisen, z.B. Sicherheitsmerkmale auf der Basis von Core-Shell-Partikeln, die verschiedene Lumineszenzpigmente im Kern und in der Schale eines Partikels aufweisen. Denn für den Aufbau von Core-Shell-Partikeln ist nur eine eingeschränkte Auswahl an Materialien verwendbar, und die kontrollierte Herstellung dieser Partikel ist sehr aufwändig. Im Gegensatz dazu kann das erfindungsgemäße Sicherheitsmerkmal mit viel geringerem Aufwand hergestellt werden.

Es wurde überraschend herausgefunden, dass bei manchen Lumineszenzpigmenten, in bestimmten Bereichen der Stoffmengenanteile, beide Lumineszenzpeaks emittiert werden und deren Peakintensitäten jeweils durch die Stoffmengenanteile des ersten und des zweiten Luminophors an dem Lumineszenzpigment variierbar sind. Für die erfindungsgemäßen Sicherheitsmerkmale werden daher solche Lumineszenzpigmente gewählt, bei denen das Verhältnis der beiden Peakintensitäten durch die Stoffmengenanteile des ersten und zweiten Luminophors gezielt einstellbar ist. Durch geringfügige Veränderung der Stoffmengenanteile lassen sich verschiedene intrinsisch festgelegte Intensitätsverhältnisse der beiden Lumineszenzpeaks erzielen. Es hat sich herausgestellt, dass eine geringe Variation des Stoffmengenanteils des zweiten Luminophors einen großen Einfluss auf die Peakintensitäten des ersten und zweiten Lumineszenzpeaks hat. Eine Variation des Stoffmengenanteils des ersten Luminophors hat im Vergleich dazu häufig nur einen relativ geringen Einfluss auf die Peakintensitäten der beiden Lumineszenzpeaks. Allerdings sollte der Stoffmengenanteil x des ersten Luminophors nicht so groß sein wie er üblicherweise bei Upconverter-Lumineszenzpigmenten gewählt wird, da bei derart hohen Stoffmengenanteilen x die Peakintensität des ersten Lumineszenzpeaks aufgrund von Konzentrationsquenching stark unterdrückt wird. Bevorzugt ist bei den erfindungsgemäßen Lumineszenzpigmenten der Stoffmengenanteil x des ersten Luminophors an dem Lumineszenzpigment daher so gering, dass kein oder nur ein vernachlässigbar geringes Konzentrationsquenching des ersten Lumineszenzpeaks auftritt.

Das Lumineszenzlicht, das von dem erfindungsgemäßen Lumineszenzpigment als Folge der optischen Anregung emittiert wird, weist ein Lumineszenzspektrum auf, das einen durch den ersten Luminophor emittierten ersten Lumineszenzpeak aufweist und einen durch den zweiten Luminophor emittierten zweiten Lumineszenzpeak aufweist. Der erste und zweite Lumineszenzpeak werden also durch zwei verschiedene Luminophore erzeugt, mit denen das Wirtsgitter des Lumineszenzpigments dotiert ist. Je nach Typ des gewählten ersten und zweiten Luminophors und in Abhängigkeit der optischen Anregung kann deren Lumineszenz jeweils auch weitere Lumineszenzpeaks aufweisen. Im Gegensatz zu den bisherigen Sicherheitsmerkmalen werden der erste und zweite Lumineszenzpeak bei dem erfindungsgemäßen Sicherheitsmerkmal durch ein einziges Lumineszenzpigment emittiert, nicht durch Mischung zweier oder mehrerer Lumineszenzpigmente. Insbesondere können der erste und zweite Lumineszenzpeak aus elektronischen Übergängen zweier verschiedener Luminophore resultieren, mit denen das Lumineszenzpigment dotiert ist, so dass der erste und zweite Lumineszenzpeak aus verschiedenen elektronischen Übergängen desselben Lumineszenzpigments resultieren.

Bei den erfindungsgemäßen Lumineszenzpigmenten ist die Anregungsenergie des ersten Luminophors von dem ersten auf den zweiten Luminophor übertragbar. Für das erfindungsgemäße Lumineszenzpigment werden z.B. Kombinationen von zwei Luminophoren verwendet, die in demselben Wirtsgitter etwa gleiche Energieniveau-Abstände besitzen, damit, bei einem Übergang des ersten Luminophors von einem oberen in ein unteres Energieniveau, dessen Energie von dem zweiten Luminophor durch dessen Übergang von einem unteren auf ein oberes Energieniveaus aufgenommen werden kann. Zu diesem Zweck geeignet sind z.B. Lumineszenzpigmente, bei denen eine Emissionsbande des ersten Luminophors mit einer Absorptionsbande des zweiten Luminophors überlappt. Die Übertragung der Anregungsenergie kann insbesondere durch einen resonanten Energietransfer zwischen dem ersten und dem zweiten Luminophor stattfinden. Welche Luminophore in einem Wirtsgitter überhaupt zu einer Energieübertragung fähig sind, lässt sich der Fachliteratur entnehmen. Auf diese Weise können viele Kombinationen zweier Luminophore und dem passenden Wirtgitter angegeben werden, die prinzipiell für das erfindungsgemäße Verfahren geeignet sind. Sind zwei Luminophore gewählt, die in einem Wirtsgitter zu einer Energieübertragung fähig sind, so wird gezielt die mittlere Wahrscheinlichkeit für diese Energieübertragung reduziert, z.B. durch Reduzierung des Stoffmengenanteils eines oder beider Luminophore in dem Wirtsgitter. In der Praxis kann das Lumineszenzpigment mit den gewünschten Lumineszenzeigenschaften anhand einer üblichen Versuchsreihe ermittelt werden, bei der die Stoffmengenanteile der Luminophore in dem Wirtsgitter variiert werden. Als erfindungsgemäße Lumineszenzpigmente können anschließend eines oder mehrere Lumineszenzpigmente mit denjenigen Stoffmengenanteilen der Luminophore verwendet werden, bei denen im Lumineszenzspektrum die Lumineszenzpeaks beider Luminophore deutlich hervortreten.

Der erste und zweite Luminophor können über einen Teilbereich des Wirtsgitters verteilt sein. Dabei können die räumlichen Verteilungen des ersten und des zweiten Luminophors vollständig oder teilweise überlappen. Bevorzugt sind jedoch Lumineszenzpigmente, bei denen der erste und zweite Luminophor über das gesamte Wirtsgitter des Lumineszenzpigments verteilt sind, da in diesem Fall der Herstellungsaufwand für das Lumineszenzpigment gering ist.

Der erste und zweite Luminophor und das Wirtsgitter sind derart gewählt, dass eine optisch erzeugte Anregungsenergie des ersten Luminophors durch eine Wechselwirkung zwischen dem ersten Luminophor und dem zweiten Luminophor von dem ersten auf den zweiten Luminophor übertragbar ist. Die optische Anregung des Lumineszenzpigments kann insbesondere durch Bestrahlen des Lumineszenzpigments mit Licht eines geeigneten Spektralbereichs erreicht werden, in dem das Lumineszenzpigment absorbiert. Durch diese optische Anregung wird eine Anregungsenergie des ersten Luminophors erzeugt, die anschießend teilweise auf den zweiten Luminophor übertragen wird. Der auf diese Weise angeregte zweite Luminophor kann seine Anregungsenergie anschließend durch Emittieren von Lumineszenzlicht wieder abgeben. Aufgrund der nur teilweisen Übertragung der Anregungsenergie gibt auch der erste Luminophor einen Teil seiner Anregungsenergie durch Emittieren von Lumineszenzlicht ab. Die Anregungsenergie des ersten Luminophors kann auf folgende Weise durch optische Anregung des Lumineszenzpigments erzeugt werden:

### 1. Variante

Die Anregungsenergie des ersten Luminophors wird unmittelbar durch selektive optische Anregung des ersten Luminophors erzeugt. Anschließend wird die Anregungsenergie des ersten Luminophors auf den zweiten Luminophor übertragen. Zur selektiven optischen Anregung des ersten Luminophors kann das Lumineszenzpigment z.B. gezielt mit einer oder mehreren Absorptionswellenlängen des ersten Luminophors bestrahlt werden. Insbesondere kann dazu eine spektral schmalbandige optische Anregung verwendet werden.

### 2. Variante

Die Anregungsenergie des ersten Luminophors wird - mittelbar - durch optische Anregung des Wirtsgitters und anschließender Übertragung der Anregungsenergie von dem Wirtsgitter auf den ersten Luminophor erzeugt, und dann von dem ersten auf den zweiten Luminophor übertragen. Gegebenenfalls kann die in dem Wirtsgitter erzeugte Energie von dem Wirtsgitter teilweise auf den ersten Luminophor und teilweise direkt auf den zweiten Luminophor übertragen werden. Zur optischen Anregung des Wirtsgitters wird das Lumineszenzpigment z.B. gezielt mit einer oder mehreren Absorptionswellenlängen des Wirtsgitters bestrahlt. Insbesondere kann das Wirtsgitter zu diesem Zweck spektral breitbandig optisch angeregt werden.

Diese beiden Varianten schließen sich nicht aus. In Abhängigkeit der Bestandteile des erfindungsgemäßen Sicherheitsmerkmals und in Abhängigkeit der gewählten optischen Anregung kann die optische Anregung entweder über eine der beiden Varianten oder beide Varianten gemeinsam erreicht werden. Gegebenenfalls können der erste und der zweite Luminophor ihre Anregungsenergie untereinander auch wechselseitig, d.h. in beide Richtungen aufeinander übertragen. Die Übertragung der Anregungsenergie von dem ersten Luminophor auf den zweiten Luminophor kann gegebenenfalls durch das Wirtsgitter beeinflusst werden. Das Wirtsgitter kann z.B. gezielt so gewählt werden, dass durch seinen Einfluss die Übertragung der Anregungsenergie von dem ersten auf den zweiten Luminophor unterdrückt oder gefördert wird. Außerdem kann das Wirtsgitter mit einem oder mehreren zusätzlichen Dotierstoffen dotiert sein, um die Übertragung der Anregungsenergie gezielt zu beeinflussen.

Die Erfindung betrifft auch ein Verfahren zum Nachweisen des Sicherheitsmerkmals, bei dem eine optische Anregung des Lumineszenzpigments durchgeführt wird, um das Lumineszenzpigment zur Emission des Lumineszenzlichts optisch anzuregen, und die Intensitäten des in dem Lumineszenzspektrum des Lumineszenzpigments enthaltenen ersten und zweiten Lumineszenzpeaks detektiert werden. Diese detektierten Intensitäten der Lumineszenzpeaks können die Peakintensitäten oder die spektral über den jeweiligen Lumineszenzpeak integrierte Intensität sein. Die optische Anregung des Lumineszenzpigments, durch welche die Anregungsenergie des ersten Luminophors erzeugt wird, erfolgt dabei nach der oben genannten ersten und/oder nach der oben genannten zweiten Variante. Zum Nachweisen des Sicherheitsmerkmals werden die detektierten Intensitäten des ersten und des zweiten Lumineszenzpeaks ausgewertet, z.B. um die Echtheit des Sicherheitsmerkmals zu prüfen bzw. die Echtheit eines Sicherheitselements, einer Druckfarbe oder eines Wertdokuments, welches das Sicherheitsmerkmal aufweist. Das Bestrahlen des Sicherheitsmerkmals mit Licht und das Detektieren der Intensitäten sowie optional auch das Auswerten wird mit einem dafür ausgebildeten Sensor durchgeführt.

Als Stoffmengenanteil des Luminophors wird der mengenmäßige relative Anteil des Luminophors an dem Lumineszenzpigment bezeichnet. Der Stoffmengenanteil x eines Luminophors ist die relative Anzahl der Luminophorteilchen (z.B. Atome, Ionen) an der Gesamtteilchenzahl, die das Lumineszenzpigment gemäß seiner Verhältnisformel aufweist. Aus dem Konzentrationsparameter, mit dem die Luminophormenge in der Verhältnisformel des Lumineszenzpigments angegeben wird, berechnet sich der Stoffmengenanteil des Luminophors daher mittels Division durch die in der Verhältnisformel angegebene Gesamtzahl an Teilchen (Atome, Ionen).

Bei manchen der erfindungsgemäßen Lumineszenzpigmente variiert das Lumineszenzspektrum stark in Abhängigkeit des genauen relativen Anteils der beiden Luminophore. Variationen eines Luminophoranteils innerhalb des Wirtsgitters können dann zu lokal unterschiedlichen Peakintensitäten führen. Daher ist es bevorzugt, dass der erste und zweite Luminophor homogen in dem Wirtsgitter verteilt sind. Insbesondere sind in dem Volumenbereich des Wirtsgitters, der sowohl mit dem ersten als auch mit dem zweiten Luminophor dotiert ist, der erste und zweite Luminophor jeweils im Wesentlichen homogen verteilt.

Bei manchen der bisher bekannten Sicherheitsmerkmale kann deren Lumineszenzspektrum durch ein ähnliches Lumineszenzspektrum eines gefälschten Lumineszenzpigments nachgestellt werden. Sofern Abweichungen von der exakten chemischen Zusammensetzung des Sicherheitsmerkmals sich nur geringfügig auf das erhaltene Lumineszenzspektrum auswirken, braucht nicht unbedingt die identische chemische Zusammensetzung des Lumineszenzpigments getroffen zu werden, um ein ausreichend ähnliches Lumineszenzspektrum zu erhalten. Bevorzugt wird für das erfindungsgemäße Sicherheitsmerkmal daher ein Lumineszenzpigment verwendet, das in Abhängigkeit des Stoffmengenanteils des zweiten Luminophors eine qualitative Veränderung des Lumineszenzspektrums zeigt. Das heißt die Peakintensitäten skalieren bei dem erfindungsgemäßen Lumineszenzpigment nicht gleichmäßig, sondern das Verhältnis der Peakintensitäten des ersten und zweiten Lumineszenzpeaks ändert sich durch Änderung des Stoffmengenanteils des zweiten Luminophors. Bevorzugt ist außerdem, dass die Peakintensitäten des ersten und zweiten Lumineszenzpeaks durch eine Änderung des Stoffmengenanteils des zweiten Luminophors gegenläufig zueinander veränderbar sind. Die gegenläufige Veränderung der Peakintensitäten resultiert dabei ausschließlich aus der Veränderung des Stoffmengenanteils des zweiten Luminophors, während der Stoffmengenanteil des ersten Luminophors unverändert gelassen wird. Durch eine Änderung des Stoffmengenanteils des zweiten Luminophors erhöht sich dann die Lumineszenzintensität eines der beiden Lumineszenzpeaks auf Kosten des anderen der beiden Lumineszenzpeaks. Dies hat den Vorteil, dass die Fälschungssicherheit des Lumineszenzpigments erhöht ist. Denn selbst wenn zur Nachahmung die richtigen Bestandteile des echten Lumineszenzpigments gefunden werden sollten, muss der Stoffmengenanteil des Luminophors genau getroffen werden, um ein Lumineszenzspektrum zu erhalten, das dem des Sicherheitsmerkmals ausreichend nahe kommt. Eine Erhöhung des Stoffmengenanteils des zweiten Luminophors kann dazu führen, dass die Peakintensität des ersten Lumineszenzpeaks abnimmt und des zweiten Lumineszenzpeaks zunimmt.

Die Bestandteile des Lumineszenzpigments, insbesondere das Wirtsgitter und der erste und der zweite Luminophor, sind derart gewählt, dass diese - bei veränderten Stoffmengeanteilen - zu einer vollständigen Übertragung der Anregungsenergie von dem ersten auf den zweiten Luminophor neigen, z.B. im Fall eines entsprechend höheren Stoffmengenanteils des zweiten Luminophors. Bei einem solchen (nicht erfindungsgemäßen) Lumineszenzpigment, das die veränderten Stoffmengeanteile aufweist, würde die Anregungsenergie vollständig auf den zweiten Luminophor übertragen und demzufolge die Peakintensität des ersten Lumineszenzpeaks, im Vergleich zur Peakintensität des zweiten Lumineszenzpeaks im Wesentlichen verschwinden. Eine vollständige Übertragung der Anregungsenergie kann z.B. bei einem (nicht erfindungsgemäßen) Lumineszenzpigment erfolgen, bei dem der Stoffmengenanteil des zweiten Luminophors um ein Vielfaches höher gewählt ist als der Stoffmengenanteil des zweiten Luminophors bei dem erfindungsgemäßen Lumineszenzpigment gewählt ist. Zu dem erfindungsgemäßen Lumineszenzpigment kann üblicherweise ein solches nicht erfindungsgemäßes Lumineszenzpigment mit vollständiger oder nahezu vollständiger Übertragung der Anregungsenergie angegeben werden, das sich von dem erfindungsgemäßen Lumineszenzpigment durch einen erhöhten Stoffmengenanteil des zweiten Luminophors unterscheidet.

Die Wechselwirkung, durch welche bei dem erfindungsgemäßen Lumineszenzpigment die Anregungsenergie von dem ersten Luminophor auf den zweiten Luminophor übertragbar ist, findet innerhalb des Volumenbereichs des Wirtsgitters statt, der sowohl mit dem ersten als auch mit dem zweiten Luminophor dotiert ist. Da hier die Wechselwirkung innerhalb eines Volumenbereichs desselben Materials (des Lumineszenzpigments) stattfindet, ergeben sich Vorteile gegenüber den bekannten Sicherheitsmerkmalen, die räumlich getrennte Lumineszenzbereiche verwenden, zwischen denen eine Wechselwirkung stattfindet. Denn bei diesen muss für eine ausreichende räumliche Nähe der verschiedenen Lumineszenzbereiche gesorgt werden. Die Herstellung solcher Sicherheitsmerkmale ist daher aufwändiger.

Bei dem erfindungsgemäßen Lumineszenzpigment ist die Wechselwirkung, durch welche die Anregungsenergie von dem ersten Luminophor auf den zweiten Luminophor übertragbar ist, eine strahlungslose Wechselwirkung zwischen dem ersten und dem zweiten Luminophor. Der erste und zweite Luminophor sind also dazu ausgebildet, dass die Anregungsenergie ohne Austausch von Lichtquanten von dem ersten auf den zweiten Luminophor übertragbar ist. Insbesondere kann es sich dabei um eine Dipol-Dipol-Wechselwirkung zwischen dem ersten und zweiten Luminophor handeln. Die strahlungslose Übertragung der Anregungsenergie ist vorteilhaft im Vergleich zu bekannten Sicherheitsmerkmalen, die ihre Anregungsenergie durch eine strahlende Wechselwirkung aufeinander übertragen, denn bei letzteren kann das Verhältnis der Peakintensitäten oft nur über einen beschränkten Wertebereich variiert werden. Weiterhin benötigen solche Sicherheitsmerkmale, in denen der Austausch über Emission und Reabsorption von Lichtquanten stattfindet, aufgrund der geringen Absorptionsrate oft hohe Luminophorkonzentrationen und einen komplexen Aufbau bzw. eine räumliche Trennung der einzelnen Luminophore in räumliche Teilbereiche, wie z.B. Schichtsysteme. Bei dem erfindungsgemäßen Lumineszenzpigment kann, neben der Übertragung der Anregungsenergie zwischen dem ersten und dem zweiten Luminophor über die strahlungslose Wechselwirkung, allenfalls zusätzlich auch eine Übertragung der Anregungsenergie durch einen Austausch von Lichtquanten stattfinden.

Die Peakwellenlängen des ersten und zweiten Lumineszenzpeaks sind bevorzugt spektral mindestens 20 nm, besonders bevorzugt mindestens 30 nm, voneinander beabstandet. Die beiden Lumineszenzpeaks können daher bei der Überprüfung des Sicherheitsmerkmals spektral einfach voneinander unterschieden werden. Vorzugsweise liegen die Peakwellenlängen des ersten und zweiten Lumineszenzpeaks im nahinfraroten Spektralbereich, insbesondere im Spektralbereich zwischen 750 nm und 2900 nm, bevorzugt zwischen 800 nm und 2200 nm. Gerade der nahinfrarote Spektralbereich ist bevorzugt, da diese Wellenlängen außerhalb des sichtbaren Spektralbereichs liegen, so dass ein unauffälliger Einsatz des Sicherheitsmerkmals möglich ist. Je nach dem, welches Wirtsgitter und welcher erste und zweiter Luminophor verwendet werden, kann das Lumineszenzpigment zur Emission des Lumineszenzlichts durch Bestrahlen mit Licht im ultravioletten oder im sichtbaren Spektralbereich oder im nahinfraroten Spektralbereich optisch anregbar sein. Im Lumineszenzspektrum des Lumineszenzpigments liegt die Peakwellenlänge des ersten Lumineszenzpeaks insbesondere bei einer kleineren Wellenlänge als die Peakwellenlänge des zweiten Lumineszenzpeaks. Und die Peakwellenlängen des ersten und des zweiten Lumineszenzpeaks sind, im Vergleich zu der optischen Anregung des Lumineszenzpigments, zu größeren Wellenlängen verschoben (Stokes-Emission). Gegenüber dem umgekehrten Fall, wenn die optische Anregung bei einer größeren Wellenlänge liegt als die Lumineszenzpeaks (Antistokes-Emission, wie sie z.B. Upconverter-Lumineszenzpigmente aufweisen) ist dies vorteilhaft, da bei Stokes-Emission höhere Lumineszenzintensitäten erreichbar sind als bei Antistokes-Emission. Im Gegensatz zu Upconverter-Lumineszenzpigmenten reicht bei den erfindungsgemäßen Lumineszenzpigmenten daher bereits eine geringe Menge des Lumineszenzpigments aus, um gut nachweisbare Peakintensitäten zu erhalten.

Der Stoffmengenanteil des zweiten Luminophors an dem Lumineszenzpigment liegt zwischen 50 ppm und 2000 ppm. Der erste Luminophor und/oder der zweite Luminophor sind aus den Seltenerdionen Seltenerdionen Erbium, Holmium, Neodym, Thulium, Ytterbium ausgewählt.

Das Wirtsgitter ist als anorganisches Wirtsgitter ausgebildet, wobei das Wirtsgitter ein Wirtsgitter mit einer Granatstruktur oder mit einer Perowskitstruktur ist oder ein Oxid oder ein Wolframat oder Phosphat oder Niobat oder Tantalat oder Silikat oder Aluminat ist. Zum Beispiel ist das Wirtsgitter ein Scandium-Gallium-Granat, ein Yttrium-Aluminium-Granat oder ein davon abgeleiteter Mischgranat. Wenn das Wirtsgitter eine Granatstruktur oder eine Perowskitstruktur aufweist, enthält dieses bevorzugt auch eines oder mehrere der Elemente Vanadium, Chrom, Mangan, Eisen, Kobalt oder Nickel als absorbierendes Element. Das Wirtsgitter kann auch ein Oxid sein, oder ein Wolframat, Phosphat, Niobat, Tantalat, Silikat oder Aluminat. Das Wirtsgitter des Lumineszenzpigments kann zusätzlich auch mit anderen Dotierstoffen dotiert sein, die nicht lumineszieren, z.B. mit Dotierstoffen, die zur Kristallbildung benötigt werden. Das Wirtsgitter kann zusätzlich mit einem oder mehreren weiteren Luminophoren dotiert sein. Das Lumineszenzpigment ist zum Beispiel als Pulver ausgebildet, dessen Partikel aus dem dotierten Wirtsgitter bestehen. Die Partikel können z.B. eine Korngröße im Bereich von 1 bis 20 µm, bevorzugt < 6 µm aufweisen. Die erfindungsgemäßen Eigenschaften werden nur bei bestimmten Zusammensetzungen des Lumineszenzpigments erzielt, d.h. bestimmten Kombinationen der beiden Luminophore, bestimmten Stoffmengenanteilen der Luminophore und bei bestimmten Kombinationen aus Luminophor und Wirtsgitter. Die Wahl eines anderen Luminophors, eines anderen Stoffmengenanteils des Luminophors oder eines anderen Wirtsgitters führt im Allgemeinen zu einem Lumineszenzpigment, das die erfindungsgemäßen Eigenschaften nicht hat.

Das Lumineszenzpigment kann auch mehr als zwei Luminophore aufweisen, mit denen das Wirtsgitter dotiert ist, wobei zwischen mehreren der Luminophore eine derartige Übertragung der Anregungsenergie erfolgen kann. Beispielsweise kann eine Anregungsenergie von einem ersten teilweise auf einen zweiten Luminophor übertragen werden und von dem zweiten Luminophor teilweise auf einen dritten Luminophor sowie gegebenenfalls auf weitere Luminophore. Durch die jeweils unvollständige Übertragung der Anregungsenergie kann erreicht werden, dass dabei alle diese Luminophore lumineszieren und die Intensitäten der Lumineszenzpeaks zum Nachweisen des betreffenden Sicherheitsmerkmals verwendet werden.

Mehrere erfindungsgemäße Lumineszenzpigmente, die verschiedene Anteile P der Peakintensität des zweiten Lumineszenzpeaks an der Summe der beiden Peakintensitäten aufweisen, können dazu verwendet werden, Sicherheitsmerkmale mit verschiedenen Kodierungen herzustellen, z.B. um verschiedene Arten von Wertdokumenten mit verschiedenen Kodierungen zu versehen. Während für ein erstes Sicherheitsmerkmal ein Lumineszenzpigment verwendet wird, das einen ersten Anteil P der zweiten Peakintensität aufweist, erhalten weitere Sicherheitsmerkmale das Lumineszenzpigment davon abweichende Anteile P der zweiten Peakintensität, wobei die spektrale Lage der Lumineszenzpeaks wie bei dem ersten Sicherheitsmerkmal ist. Natürlich können zur Kodierung verschiedener Wertdokumente auch Sicherheitsmerkmale verwendet werden, die verschiedene oder auch mehrere der erfindungsgemäßen Lumineszenzpigmente zugleich enthalten. Zum Beispiel können Sicherheitsmerkmale mit verschieden Sorten der erfindungsgemäßen Lumineszenzpigmente kodiert sein, deren erste und zweite Lumineszenzpeaks jeweils bei verschiedenen Wellenlängen liegen. Jede Kodierung entspricht dann einer bestimmten Kombination von Anteilen P der jeweiligen zweiten Peakintensitäten der verschiedenen Lumineszenzpigmente des Sicherheitsmerkmals. Das erfindungsgemäße Sicherheitsmerkmal kann, außer dem einen oder mehreren erfindungsgemäßen Lumineszenzpigmenten, auch eines oder mehrere andere Lumineszenzpigmente aufweisen.

Die Erfindung betrifft außerdem ein Sicherheitselement, das ein erfindungsgemäßes Sicherheitsmerkmal aufweist. Das Sicherheitselement ist dazu bestimmt, auf ein Wertdokument aufgebracht oder in ein Wertdokument eingebracht zu werden. Das Sicherheitsmerkmal ist z.B. ein Sicherheitsstreifen, ein Sicherheitsfaden, ein Sicherheitsband oder ein Transferelement zum Aufbringen auf ein Wertdokument. Ferner kann das Sicherheitsmerkmal einer Druckfarbe zugemischt sein, die z.B. zum Aufbringen auf ein Wertdokument vorgesehen ist. Die das Sicherheitsmerkmal enthaltende Druckfarbe kann z.B. in einem oder mehreren bestimmten Bereichen auf das Wertdokument aufgedruckt sein. Das Sicherheitsmerkmal kann auch in das Wertdokument eingebracht sein, z.B. indem es dem Substratmaterial des Wertdokuments, insbesondere einem Papier- oder Kunststoffsubstrat, bei dessen Herstellung zugemischt wird. Außerdem betrifft die Erfindung ein Sicherheitspapier und ein Wertdokument, in das ein erfindungsgemäßes Sicherheitsmerkmal auf- oder eingebracht ist und/oder in das ein mit dem Sicherheitsmerkmal versehenes Sicherheitselement und/oder eine Druckfarbe mit dem Sicherheitsmerkmal aufweist. Das Sicherheitsmerkmal kann dem Sicherheitspapier bei der Herstellung des Sicherheitspapiers zugemischt werden. Das Sicherheitsmerkmal kann vollflächig oder teilflächig, insbesondere in Form von Zeichen oder Mustern, auf eine Oberfläche des Wertdokuments bzw. des Sicherheitspapiers bzw. des Sicherheitselements aufgebracht sein. Verschiedene Abschnitte des Wertdokuments bzw. des Sicherheitspapiers bzw. des Sicherheitselements können mit Sicherheitsmerkmalen mit verschiedener Kodierung versehen sein.

Bei den abzusichernden Wertdokumenten handelt es sich beispielsweise um Banknoten, Schecks, Ausweise, Pässe, Kreditkarten, Scheckkarten, Tickets, Gutscheine, Aktien, Urkunden, Wertmarken etc..

Nachfolgend wird die Erfindung beispielhaft anhand der folgenden Figuren erläutert. Es zeigen:
- Figur 1a: Lumineszenzspektrum eines Lumineszenzpigments mit einem Lumineszenzpeak B eines zweiten Luminophors L2 und verschwindender erster Lumineszenz eines ersten Luminophors L1,
- Figuren 1b,c: jeweils das Lumineszenzspektrum eines erfindungsgemäßen Lumineszenzpigments mit einem ersten Lumineszenzpeak A eines ersten Luminophors L1 und einem zweiten Lumineszenzpeak B eines zweiten Luminophors L2,
- Figur 2: Verlauf des Anteils P der Peakintensität des Lumineszenzpeaks B des zweiten Luminophors L2 an der Summe der Peakintensitäten des ersten Lumineszenzpeaks A und zweiten Lumineszenzpeaks B.

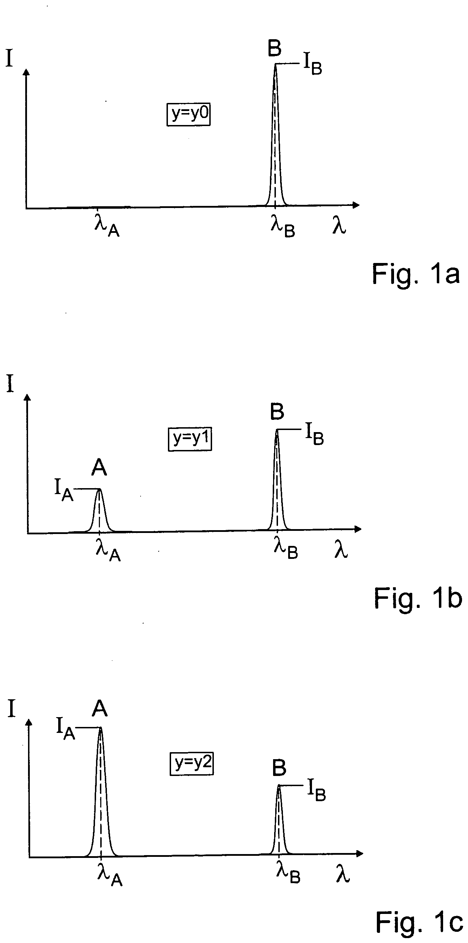

In Figur 1a ist das Lumineszenzspektrum eines Lumineszenzpigments dargestellt, das mit einem ersten Luminophor L1 und einem zweiten Luminophor L2 dotiert ist, zwischen denen eine vollständige Übertragung ihrer Anregungsenergie stattfindet. Das Lumineszenzspektrum besteht aus einem Lumineszenzpeak B bei einer Wellenlänge λ_{B}, der aus der Lumineszenz des zweiten Luminophors L2 resultiert. Der erste Luminophor wirkt als Aktivator, der seine Anregungsenergie vollständig auf den zweiten Luminophor überträgt und daher bei der Wellenlänge λ_{A}, bei der der erste Luminophor L1 für sich allein üblicherweise luminesziert, keine Lumineszenz zeigt. Das Lumineszenzpigment aus dem Beispiel der Figur 1a weist den zweiten Luminophor L2 mit einem Stoffmengenanteil y0 auf.

Die Figuren 1b, 1c zeigen jeweils das Lumineszenzspektrum eines erfindungsgemäßen Lumineszenzpigments, das ebenfalls mit dem ersten Luminophor L1 und dem zweiten Luminophor L2 dotiert ist. Die Lumineszenzpigmente der Beispiele aus den Figuren 1b, 1c zeichnen sich gegenüber dem Lumineszenzpigment der Figur 1a durch einen besonderen Stoffmengenanteil y aus, mit dem der zweite Luminophor L2 in dem Lumineszenzpigment enthalten ist. Die beiden Lumineszenzpigmente der Figuren 1b, 1c unterscheiden sich untereinander nur durch den Stoffmengenanteil y des zweiten Luminophors L2, der bei dem Lumineszenzpigment der Figur 1b mit y1 bezeichnet ist und im Beispiel der Figur 1c mit y2 bezeichnet ist.

Beide Lumineszenzspektren der Figuren 1b, 1c weisen jeweils einen Lumineszenzpeak A bei einer Wellenlänge λ_{A} auf, der aus der Lumineszenz des ersten Luminophors L1 resultiert, und einen Lumineszenzpeak B bei einer Wellenlänge λ_{B}, der aus der Lumineszenz des zweiten Luminophors L2 resultiert. Im Gegensatz zum Beispiel der Figur 1a tritt bei diesen Beispielen also auch die Lumineszenz des ersten Luminophors L1 auf, obwohl der erste Luminophor L1 zur Übertragung seiner Anregungsenergie auf den zweiten Luminophor L2 neigt. Im Beispiel der Figur 1b beträgt das Intensitätsverhältnis I_{A}/I_{B} der beiden Lumineszenzpeaks A, B etwa 0,43:1 entsprechend einem Anteil P=I_{B}/(I_{A}+I_{B}) der Peakintensität I_{B} an der Summe der beiden Peakintenstitäten (I_{A}+I_{B}) von 70%. Im Beispiel der Figur 1c beträgt das Intensitätsverhältnis I_{A}/I_{B} der beiden Lumineszenzpeaks A, B etwa 1,9:1 entsprechend einem Anteil P=I_{B}/(I_{A}+I_{B}) der Peakintensität I_{B} an der Summe der beiden Peakintenstitäten (I_{A}+I_{B}) von 34%.

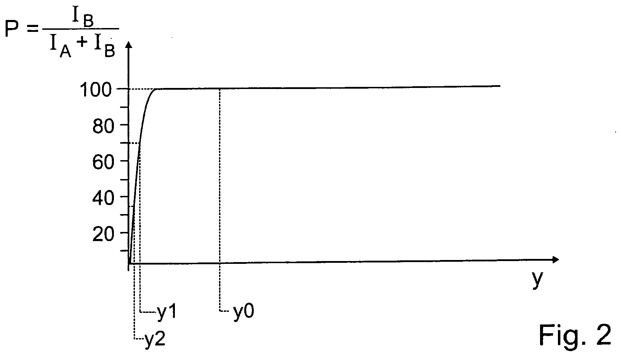

In Figur 2 ist der Anteil P=I_{B}/(I_{A}+I_{B}) der zweiten Peakintensität als Funktion des Stoffmengenanteils y des zweiten Luminophors L2 skizziert. Über einen weiten Bereich des Stoffmengenanteils y liegt der Anteil P der Peakintensität I_{B} bei 100%, da bei diesen Stoffmengeanteilen y des zweiten Luminophors eine vollständige Übertragung der Anregungsenergie von dem ersten Luminophor L1 auf den zweiten Luminophor L2 stattfindet. Erst bei sehr geringen Stoffmengenanteilen y fällt der Anteil P auf unter 100% und reduziert sich stetig bis auf 0% beim Stoffmengenanteil y=0, d.h. wenn das Lumineszenzpigment nur den ersten Luminophor, aber keinen zweiten Luminophor L2 aufweist. Bei geeigneten Stoffmengenanteilen y des zweiten Luminophors, z.B. y1 und y2, ergibt sich also eine unvollständige Übertragung der Anregungsenergie auf den zweiten Luminophor. Mit y0, y1, y2 sind in Figur 2 die Stoffmengenanteile y des zweiten Luminophors L2 an dem Lumineszenzpigment für die Beispiele der Figuren 1a, 1b, 1c markiert.

Das erfindungsgemäße Lumineszenzpigment zeigt in Abhängigkeit des Stoffmengenanteils y des zweiten Luminophors eine qualitative Veränderung des Lumineszenzspektrums. d.h. die Peakintensitäten skalieren bei dem erfindungsgemäßen Lumineszenzpigment nicht gleichmäßig, sondern das Verhältnis der Peakintensitäten des ersten und zweiten Lumineszenzpeaks ändert sich bei Änderung des Stoffmengenanteils y des zweiten Luminophors Der besondere Stoffmengenanteil y der Beispiele der Figuren 1b und 1c führt dazu, dass das Intensitätsverhältnis der beiden Lumineszenzpeaks A und B sich stark ändert. Bei Änderung des Stoffmengenanteils y ergibt sich in diesem Beispiel eine gegenläufige Änderung der beiden Peakintensitäten. Während die Peakintensität I_{A} des ersten Lumineszenzpeaks A beim Stoffmengenanteil y1 kleiner ist als beim Stoffmengenanteil y2, ist die Peakintensität I_{B} des zweiten Lumineszenzpeaks B beim Stoffmengenanteil y1 größer als beim Stoffmengenanteil y2. Bei Änderung des Stoffmengenanteils y von y1 auf y2 wird der Lumineszenzpeak A auf Kosten des Lumineszenzpeaks B stärker.

Im Folgenden werden zwei konkrete Beispiele erfindungsgemäßer Lumineszenzpigmente zur Verwendung in Sicherheitsmerkmalen angegeben. Die Lumineszenzpigmente weisen jeweils ein mit einem ersten und einem zweiten Luminophor dotiertes Wirtsgitter auf. Wie beim oben gezeigten Beispiel sind der erste und zweite Luminophor so gewählt, dass der erste Luminophor L1 als Aktivator wirkt und zur Übertragung seiner Anregungsenergie auf den zweiten Luminophor L2 neigt. Bei erfindungsgemäßen Stoffmengenanteilen y des zweiten Lumineszenzpigments L2 ergibt sich jedoch eine unvollständige Übertragung der Anregungsenergie, so dass das Lumineszenzspektrum des jeweiligen Lumineszenzpigments sowohl den Lumineszenzpeak B des zweiten Luminophors L2 als auch den Lumineszenzpeak A des ersten Luminophors L1 aufweist.

### Beispiel 1: Y_{2,68-y}Ho_{y}Yb_{0,32}Al₅O₁₂

Als Lumineszenzpigment wird ein Seltenerd-dotierter Yttrium-Aluminium-Granat verwendet. Dieser ist mit dem ersten Luminophor Yb und dem zweiten Luminophor Ho dotiert. Das Lumineszenzspektrum des Lumineszenzpigments weist bei einer Anregung mit Licht einer Wellenlänge von 941 nm einen ersten Lumineszenzpeak A bei λ_{A}=1027 nm auf, der aus der Lumineszenz des ersten Luminophors Yb resultiert, und einen zweiten Lumineszenzpeak B bei λ_{B}=2086 nm, der aus der Lumineszenz des zweiten Luminophors Ho resultiert. Die Abhängigkeit, die der Anteil P der Ho-Peakintensität I_{B} an der Summe I_{A}+I_{B} der beiden Peakintensitäten I_{A}, I_{B} vom Stoffmengenanteil y des zweiten Luminophors zeigt, entspricht qualitativ dem in Figur 2 gezeigten Verlauf.

### Beispiel 1a: Y_{2,64}Ho_{0,04}Yb_{0,32}Al₅O₁₂

Zur Herstellung dieses Seltenerd-dotierten Yttrium-Aluminium-Granats werden 2,308g *Y*(NO₃)₃·6H₂O, 4,282g Al(NO₃)₃·9H₂O, 0,328g Yb(NO₃)₃·5H₂O, 0,040g Ho(NO₃)₃·5H₂O und 2,742g Harnstoff bei 60°C in 15g Wasser gelöst und anschließend bei 675°C eingedampft. Der Yb-Konzentrationsparameter von 0,32 und der Ho-Konzentrationsparameter von 0,04 entsprechen, aufgrund der 20atomigen Verhältnisformel, einem Yb-Stoffmengenanteil von x=0,016 und einem Ho-Stoffmengenanteil von y=0,002. Bei diesen Stoffmengenanteilen x,y des ersten und zweiten Luminophors ergibt sich ein Anteil P=I_{B}/(I_{A}+I_{B}) der zweiten Peakintensität I_{B} von etwa 46%. In diesem Fall sind die Peakintensität I_{A} des Lumineszenzpeaks A und die Peakintensität I_{B} des Lumineszenzpeaks B also vergleichbar.

### Nicht-erfindungsgemäßes Gegenbeispiel zu Beispiel 1: Y_{2,58}Ho_{0,1}Yb_{0,32}Al₅O₁₂

Zur Herstellung dieses Seltenerd-dotierten Yttrium-Aluminium-Granats werden 2,256g Y(NO3)₃·6H₂O, 4,282g Al(NO₃)₃·9H₂O, 0,328g Yb(NO₃)₃·5H₂O, 0,101g Ho(NO₃)₃·5H₂O und 2,742g Harnstoff bei 60°C in 15g Wasser gelöst und anschließend bei 675°C eingedampft. Der Yb-Konzentrationsparameter von 0,32 und der Ho-Konzentrationsparameter von 0,1 entsprechen, aufgrund der 20atomigen Verhältnisformel, einem Yb-Stoffmengenanteil von x=0,016 und einem Ho-Stoffmengenanteil von y=0,005. Bei diesem Lumineszenzpigment ergibt sich ein Anteil P=I_{B}/(I_{A}+I_{B}) der zweiten Peakintensität I_{B} von etwa 86%, entsprechend einem Verhältnis der Peakintensität des Ho-Lumineszenzpeaks zur Peakintensität des Yb-Lumineszenzpeaks von 6:1.

### Beispiel 2: Na_{0,9875}Er_{0,0025}Ho_{0,01}Ti_{0,025}Nb_{0,975}O₃

Als Lumineszenzpigment wird ein Seltenerd-dotiertes Natrium-Niobat verwendet, das mit dem ersten Luminophor Er und dem zweiten Luminophor Ho dotiert ist. Zur Herstellung dieses Seltenerd-dotierten Niobats werden 2,808g Na₂CO₃, 6,956g Nb₂O₅, 0,107g TiO₂, 0,0257g Er₂O₃ und 0,101g Ho₂O₃ in einem Achatmörser homogenisiert und in einem Korundtiegel für 8h bei 1150°C geglüht. Das Lumineszenzspektrum des Lumineszenzpigments weist bei einer Anregung mit Licht einer Wellenlänge von 650 nm einen ersten Lumineszenzpeak A bei λ_{A}=982 nm auf, der aus der Lumineszenz des ersten Luminophors Er resultiert, und einen zweiten Lumineszenzpeak B bei λ_{B}=1200 nm, der aus der Lumineszenz des zweiten Luminophors Ho resultiert. Der Er-Konzentrationsparameter von 0,0025 und der Ho-Konzentrationsparameter von 0,01 entsprechen, aufgrund der 5atomigen Verhältnisformel, einem Er-Stoffmengenanteil von x=0,0005 und einem Ho-Stoffmengenanteil von y=0,002. Bei diesen Stoffmengenanteilen x des ersten Luminophors Er und des zweiten Luminophors Ho ergibt sich ein Anteil P=I_{B}/(I_{A}+I_{B}) der zweiten Peakintensität I_{B} von etwa 40%, entsprechend einem Verhältnis der Peakintensität des Ho-Lumineszenzpeaks zur Peakintensität des Er-Lumineszenzpeaks von 2:3.

### Nicht-erfindungsgemäßes Gegenbeispiel zu Beispiel 2:

### Na_{0,8975}Er_{0,0025}Ho_{0,1}Ti_{0,205}Nb_{0,795}O₃

Wie in Beispiel 2 wird als Lumineszenzpigment ein Seltenerd-dotiertes Natrium-Niobat betrachtet. Zur Herstellung dieses Seltenerd-dotierten Niobats werden 2,517g Na₂CO₃, 5,591g Nb₂O₃, 0,866g TiO₂, 0,0252g Er₂O₃ und 0,999g Ho₂O₃ in einem Achatmörser homogenisiert und in einem Korundtiegel für 8h bei 1150°C geglüht. Der Er-Konzentrationsparameter von 0,0025 und der Ho-Konzentrationsparameter von 0,1 entsprechen, aufgrund der 5atomigen Verhältnisformel, einem Er-Stoffmengenanteil von x=0,0005 und einem Ho-Stoffmengenanteil von y=0,02. Bei diesem Lumineszenzpigment ergibt sich ein Anteil P=I_{B}/(I_{A}+I_{B}) der zweiten Peakintensität I_{B} von etwa 93%, entsprechend einem Verhältnis der Peakintensität des Ho-Lumineszenzpeaks zur Peakintensität des Er-Lumineszenzpeaks von 13,3:1.

## Patentansprüche

1. Sicherheitsmerkmal zur Absicherung von Wertdokumenten, umfassend:
ein Lumineszenzpigment, das ein mit einem ersten Luminophor (L1) und
einem zweiten Luminophor (L2) dotiertes Wirtsgitter aufweist und das zur Emission von Lumineszenzlicht optisch anregbar ist, wobei der Stoffmengenanteil des zweiten Luminophors an dem Lumineszenzpigment zwischen 50 ppm und 2000 ppm liegt, wobei eine Emissionsbande des ersten Luminophors mit einer Absorptionsbande des zweiten Luminophors überlappt und das Lumineszenzpigment dazu ausgebildet ist, dass eine durch optische Anregung des Lumineszenzpigments erzeugte Anregungsenergie des ersten Luminophors (L1), durch eine Wechselwirkung zwischen dem ersten Luminophor (L1) und dem zweiten Luminophor (L2), auf den zweiten Luminophor (L2) übertragbar ist, **dadurch gekennzeichnet,**
- **dass** der Stoffmengenanteil (x) des ersten Luminophors (L1) an dem Lumineszenzpigment und der Stoffmengenanteil (y) des zweiten Luminophors (L2) an dem Lumineszenzpigment derart gewählt sind, dass eine unvollständige Übertragung der Anregungsenergie von dem ersten auf das zweite Luminophor erreicht wird, wobei das Lumineszenzlicht des Lumineszenzpigments ein Lumineszenzspektrum mit einem durch den ersten Luminophor (L1) emittierten ersten Lumineszenzpeak (A) und einem durch den zweiten Luminophor (L2) emittierten zweiten Lumineszenzpeak (B) aufweist, wobei der Anteil (P) der Peakintensität (I_{B}) des zweiten Lumineszenzpeaks (B) an der Summe der Peakintensitäten (I_{A}, I_{B}) des ersten (A) und des zweiten Lumineszenzpeaks (B) mindestens 20% und höchstens 80% beträgt, vorzugsweise mindestens 30% und höchstens 70%, besonders bevorzugt mindestens 40% und höchstens 60%, und
- **dass** die Peakwellenlängen des ersten und des zweiten Lumineszenzpeaks im Vergleich zu der optischen Anregung des Lumineszenzpigments zu größeren Wellenlängen verschoben sind, und
- **dass** der erste (L1) und der zweite Luminophor (L2) aus den Seltenerdionen Erbium, Holmium, Neodym, Thulium, Ytterbium ausgewählt sind, und
- **dass** das Wirtsgitter als anorganisches Wirtsgitter ausgebildet ist und dass das Wirtsgitter ein Wirtsgitter mit einer Granatstruktur oder mit einer Perowskitstruktur ist oder ein Oxid oder ein Wolframat oder Phosphat oder Niobat oder Tantalat oder Silikat oder Aluminat ist.

2. Sicherheitsmerkmal nach Anspruch 1, **dadurch gekennzeichnet, dass** die Peakintensität des ersten Lumineszenzpeaks (A) und die Peakintensität des zweiten Lumineszenzpeaks (B) ein Intensitätsverhältnis zueinander aufweisen, das intrinsisch durch die Zusammensetzung des Lumineszenzpigments festgelegt ist.

3. Sicherheitsmerkmal nach einem der vorhergehenden Ansprüche, **dadurch gekennzeichnet, dass** der erste und zweite Luminophor (L1, L2) in einem Volumenbereich des Wirtsgitters, der sowohl mit dem ersten (L1) als auch mit dem zweiten Luminophor (L2) dotiert ist, jeweils im Wesentlichen homogen verteilt sind.

4. Sicherheitsmerkmal nach einem der vorhergehenden Ansprüche, **dadurch gekennzeichnet, dass** die Bestandteile des Lumineszenzpigments, insbesondere das Wirtsgitter und der erste (L1) und der zweite Luminophor (L2), derart ausgewählt sind, dass diese - bei verändertem Stoffmengenanteil (y) des zweiten Luminophors - zu einer vollständigen Übertragung der Anregungsenergie von dem ersten (L1) auf den zweiten Luminophor (L2) neigen.

5. Sicherheitsmerkmal nach einem der vorhergehenden Ansprüche, **dadurch gekennzeichnet, dass**, durch eine Änderung des Stoffmengenanteils (y) des zweiten Luminophors (L2), die Peakintensitäten (I_{A}, I_{B}) des ersten und zweiten Lumineszenzpeaks (A, B) gegenläufig zueinander veränderbar sind.

6. Sicherheitsmerkmal nach einem der vorhergehenden Ansprüche, **dadurch gekennzeichnet, dass** die Peakwellenlängen (λ_{A}, λ_{B}) des ersten und zweiten Lumineszenzpeaks (A, B) spektral mindestens 20 nm, bevorzugt mindestens 30 nm voneinander beabstandet sind.

7. Sicherheitsmerkmal nach einem der vorhergehenden Ansprüche, **dadurch gekennzeichnet, dass** die Wechselwirkung, durch welche die Anregungsenergie von dem ersten Luminophor (L1) auf den zweiten Luminophor (L2) übertragbar ist, innerhalb eines Volumenbereichs des Wirtsgitters stattfindet, der sowohl mit dem ersten als auch mit dem zweiten Luminophor dotiert ist.

8. Sicherheitsmerkmal nach einem der vorhergehenden Ansprüche, **dadurch gekennzeichnet, dass** die Anregungsenergie des ersten Luminophors (L1) durch eine strahlungslose Wechselwirkung von dem ersten Luminophor (L1) auf den zweiten Luminophor (L2) übertragbar ist.

9. Sicherheitsmerkmal nach einem der vorhergehenden Ansprüche, **dadurch gekennzeichnet, dass** die Peakwellenlängen (λ_{A}, λ_{B}) des ersten und zweiten Lumineszenzpeaks (A, B) im nahinfraroten Spektralbereich liegen, insbesondere im Spektralbereich zwischen 750 nm und 2900 nm, bevorzugt zwischen 800 nm und 2200 nm.

10. Sicherheitselement oder Druckfarbe, das/die eines oder mehrere Sicherheitsmerkmale nach einem der Ansprüche 1 bis 9 aufweist.

11. Wertdokument oder Sicherheitspapier, das eines oder mehrere Sicherheitsmerkmale nach einem der Ansprüche 1 bis 9 und/oder ein Sicherheitselement nach Anspruch 10 und/oder eine Druckfarbe nach Anspruch 10 aufweist.

12. Verfahren zum Nachweisen eines Sicherheitsmerkmals nach einem der Ansprüche 1-9, bei dem
- das Sicherheitsmerkmal mit Licht eines Spektralbereichs bestrahlt wird, in dem das Lumineszenzpigment des Sicherheitsmerkmals absorbiert, um das Lumineszenzpigment zur Emission des Lumineszenzlichts optisch anzuregen, und
- Intensitäten des in dem Lumineszenzspektrum des Lumineszenzlichts enthaltenen ersten und zweiten Lumineszenzpeaks (A, B) detektiert werden, und
- zum Nachweisen des Sicherheitsmerkmals die detektierten Intensitäten des ersten und zweiten Lumineszenzpeaks (A, B) ausgewertet werden.

13. Verfahren nach Anspruch 12, bei dem, durch das Bestrahlen des Sicherheitsmerkmals, eine Anregungsenergie des ersten Luminophors (L1) erzeugt wird, welche von dem ersten Luminophor (L1) teilweise auf den zweiten Luminophor (L2) übertragen wird, wobei die Anregungsenergie des ersten Luminophors (L1)
- unmittelbar durch selektive optische Anregung des ersten Luminophors (L1) erzeugt wird, und/oder
- durch optische Anregung des Wirtsgitters und anschließender Übertragung der Anregungsenergie von dem Wirtsgitter auf den ersten Luminophor (L1) erzeugt wird.

## Claims

1. A security feature for safeguarding value documents, comprising: a luminescence pigment that has a host lattice doped with a first luminophore (L1) and a second luminophore (L2) and that is optically excitable to emit luminescence light, wherein substance amount fraction of the second luminophore in the luminescence pigment lies between 50 ppm and 2000 ppm, wherein an emission band of the first luminophore overlaps with an absorption band of the second luminophore and the luminescence pigment is configured that an excitation energy of the first luminophore (L1) generated through optical excitation of the luminescence pigment is transferable to the second luminophore (L2) through an interaction between the first luminophore (L1) and the second luminophore (L2), **characterized in**
- **that** the substance amount fraction (x) of the first luminophore (L1) in the luminescence pigment and the substance amount fraction (y) of the second luminophore (L2) in the luminescence pigment are chosen such that an incomplete transfer of the excitation energy from the first to second luminophore is achieved, wherein the luminescence light of the luminescence pigment has a luminescence spectrum with a first luminescence peak (A) emitted by the first luminophore (L1) and a second luminescence peak (B) emitted by the second luminophore (L2), wherein the share (P) of the peak intensity (I_{B}) of the second luminescence peak (B) is at least 20% and at most 80%, preferably at least 30% and at most 70%, particularly preferably at least 40% and at most 60% in the sum of the peak intensities (I_{A}, I_{B}) of the first (A) and of the second luminescence peak (B), and
- **that** the peak wavelengths of the first and the second luminescence peak are shifted to greater wavelengths in comparison to the optical excitation of the luminescent pigment, and
- **that** the first (L1) and the second luminophores (L2) are chosen from the rare earth ions erbium, holmium, neodymium, thulium, ytterbium, and
- **that** the host lattice is configured as an inorganic host lattice and that the host lattice is a host lattice with a garnet structure or with a perovskite structure or an oxide or a wolframate or phosphate or niobate or tantalate or silicate or aluminate.

2. The security feature according to claim 1, **characterized in that** the peak intensity of the first luminescence peak (A) and the peak intensity of the second luminescence peak (B) have an intensity ratio to each other that is intrinsically defined by the composition of the luminescence pigment.

3. The security feature according to any of the preceding claims, **characterized in that** the first and second luminophores (L1, L2) are respectively substantially homogeneously distributed in a volume region of the host lattice, which volume region is both doped with the first (L1) and with the second luminophore (L2).

4. The security feature according to any of the preceding claims, **characterized in that** the components of the luminescence pigment, in particular the host lattice and the first (L1) and the second luminophore (L2), are chosen such that these - with changed substance amount fraction (y) of the second luminophore - tend to completely transfer the excitation energy from the first (L1) to the second luminophore (L2).

5. The security feature according to any of the preceding claims, **characterized in that** through a change of the substance amount fraction (y) of the second luminophore (L2), the peak intensities (I_{A}, I_{B}) of the first and second luminescence peaks (A, B) are changeable in mutually opposite fashion.

6. The security feature according to any of the preceding claims, **characterized in that** the peak wavelengths (λ_{A}, λ_{B}) of the first and second luminescence peaks (A, B) are spectrally spaced apart from each other by at least 20 nm, preferably at least 30 nm.

7. The security feature according to any of the preceding claims, **characterized in that** the interaction through which the excitation energy is transferable from the first luminophore (L1) to the second luminophore (L2) takes place within a volume region of the host lattice, which volume region is both doped with the first and with the second luminophore.

8. The security feature according to any of the preceding claims, **characterized in that** the excitation energy of the first luminophore (L1) is transferable from the first luminophore (L1) to the second luminophore (L2) through a radiationless interaction.

9. The security feature according to any of the preceding claims, **characterized in that** the peak wavelengths (λ_{A}, λ_{B}) of the first and second luminescence peaks (A, B) lie in the near infrared spectral region, in particular in the spectral region between 750 nm and 2900 nm, preferably between 800 nm and 2200 nm.

10. A security element or printing ink having one or several security features according to any of claims 1 to 9.

11. A value document or security paper, which has one or several security features according to any of claims 1 to 9 and/or a security element according to claim 10 and/or a printing ink according to claim 10.

12. A method for proving a security feature according to any of claims 1-9, wherein
- the security feature is irradiated with light of a spectral region in which the luminescence pigment of the security feature absorbs, in order to optically excite the luminescence pigment to emit luminescence light, and
- intensities of the first and second luminescence peak (A, B) contained in the luminescence spectrum of the luminescence light are detected, and
- for proving the security feature the detected intensities of the first and second luminescence peak (A, B) are evaluated.

13. The method according to claim 12 in which, through the irradiation of the security feature, an excitation energy of the first luminophore (L1) is generated, which is partly transferred from the first luminophore (L1) to the second luminophore (L2), wherein the excitation energy of the first luminophore (L1)
- being generated directly through selective optical excitation of the first luminophore (L1), and/or
- being generated through optical excitation of the host lattice and subsequent transfer of the excitation energy from the host lattice to the first luminophore (L1).

## Revendications

1. Caractéristique de sécurité destiné à la sécurisation de documents de valeur, comprenant :
un pigment luminescent qui comporte un réseau hôte dopé avec un premier luminophore (L1) et
avec un deuxième luminophore (L2) et qui peut être, aux fins d'une émission de lumière luminescente, être optiquement excité, cependant que la proportion de substance du deuxième luminophore au pigment luminescent est comprise entre 50 ppm et 2000 ppm, cependant qu'une bande d'émission du premier luminophore se superpose à une bande d'absorption du deuxième luminophore et que le pigment luminescent est conçu pour qu'une énergie d'excitation du premier luminophore (L1) générée par excitation optique du pigment luminescent peut, par une interaction entre le premier luminophore (L1) et le deuxième luminophore (L2), être transmise au deuxième luminophore (L2), **caractérisée en ce**
- **que** la proportion de substance (x) du premier luminophore (L1) au pigment luminescent et la proportion de substance (y) du deuxième luminophore (L2) au pigment luminescent sont choisies de telle façon qu'une transmission incomplète de l'énergie d'excitation du premier au deuxième luminophore est obtenue, cependant que la lumière luminescente du pigment luminescent présente un spectre de luminescence ayant un premier pic de luminescence (A) émis par le premier luminophore (L1) et un deuxième pic de luminescence (B) émis par le deuxième luminophore (L2), cependant que la part (P) de l'intensité de pic (I_{B}) du deuxième pic de luminescence (B) s'élève à au moins 20 % et à au plus 80 % de la somme des intensités de pic (I_{A}, I_{B}) du premier (A) et du deuxième pic de luminescence (B), de préférence à au moins 30 % et à au plus 70 %, particulièrement de préférence à au moins 40 % et à au plus 60 %, et
- **que** les longueurs d'onde de pic du premier et du deuxième pic de luminescence sont, par rapport à l'excitation optique du pigment luminescent, décalées vers de plus grandes longueurs d'onde, et
- **que** le premier (L1) et le deuxième luminophore (L2) sont choisis parmi les ions de terres rares erbium, holmium, néodyme, thulium, ytterbium, et
- **que** le réseau hôte est réalisé sous forme de réseau hôte inorganique et que le réseau hôte est un réseau hôte ayant une structure de grenat ou ayant une structure de pérovskite, ou est un oxyde ou un tungstate ou phosphate ou niobate ou tantalate ou silicate ou aluminate.

2. Caractéristique de sécurité selon la revendication 1, **caractérisé en ce que** l'intensité de pic du premier pic de luminescence (A) et l'intensité de pic du deuxième pic de luminescence (B) présentent un rapport d'intensité entre eux, lequel est fixé intrinsèquement par la composition du pigment luminescent.

3. Caractéristique de sécurité selon une des revendications précédentes, **caractérisé en ce que** le premier et le deuxième luminophore (L1, L2) sont répartis respectivement de manière essentiellement homogène dans une zone volumique du réseau hôte dopé tant avec le premier (L1) qu'avec le deuxième luminophore (L2).

4. Caractéristique de sécurité selon une des revendications précédentes, **caractérisé en ce que** les éléments constitutifs du pigment luminescent, en particulier le réseau hôte et le premier (L1) et le deuxième luminophore (L2), sont choisis de telle façon que ces derniers, en cas de proportion modifiée de substance (y) du deuxième luminophore, ont tendance à transmettre complètement l'énergie d'excitation du premier (L1) au deuxième luminophore (L2).

5. Caractéristique de sécurité selon une des revendications précédentes, **caractérisé en ce que**, par une modification de la proportion de substance (y) du deuxième luminophore (L2), les intensités de pic (I_{A}, I_{B}) du premier et deuxième pic de luminescence (A, B) sont modifiables inversement l'une par rapport à l'autre.

6. Caractéristique de sécurité selon une des revendications précédentes, **caractérisé en ce que** les longueurs d'onde de pic (λ_{A}, λ_{B}) du premier et deuxième pic de luminescence (A, B) sont spectralement espacées entre elles d'au moins 20 nm, de préférence d'au moins 30 nm.

7. Caractéristique de sécurité selon au moins une des revendications précédentes, **caractérisé en ce que** l'interaction par laquelle l'énergie d'excitation peut être transmise du premier luminophore (L1) au deuxième luminophore (L2) a lieu à l'intérieur d'une zone volumique du réseau hôte dopé tant avec le premier qu'avec le deuxième luminophore.

8. Caractéristique de sécurité selon une des revendications précédentes, **caractérisé en ce que** l'énergie d'excitation du premier luminophore (L1) peut être transmise par une interaction non radiative du premier luminophore (L1) au deuxième luminophore (L2).

9. Caractéristique de sécurité selon une des revendications précédentes, **caractérisé en ce que** les longueurs d'onde de pic (λ_{A}, λ_{B}) du premier et deuxième pic de luminescence (A, B) se situent dans la plage spectrale proche de l'infrarouge, en particulier dans la plage spectrale comprise entre 750 nm et 2900 nm, de préférence entre 800 nm et 2200 nm.

10. Elément de sécurité ou encre d'impression comportant une ou plusieurs caractéristiques de sécurité selon une des revendications de 1 à 9.

11. Document de valeur ou papier de sécurité comportant une ou plusieurs caractéristiques de sécurité selon une des revendications de 1 à 9 et/ou un élément de sécurité selon la revendication 10 et/ou une encre d'impression selon la revendication 10.

12. Procédé de mise en évidence d'une caractéristique de sécurité selon une des revendications de 1 à 9, dans lequel
- la caractéristique de sécurité est irradiée avec une lumière d'une plage spectrale, ce qui a lieu en ce que le pigment luminescent de la caractéristique de sécurité absorbe afin d'exciter optiquement le pigment luminescent en émission de la lumière luminescente, et
- des intensités du premier et du deuxième pic de luminescence (A, B) contenues dans le spectre de luminescence de la lumière luminescente sont détectées,
- pour la mise en évidence de la caractéristique de sécurité, les intensités détectées du premier et du deuxième pic de luminescence (A, B) sont évaluées.

13. Procédé selon la revendication 12, dans lequel, par l'irradiation de la caractéristique de sécurité, une énergie d'excitation du premier luminophore (L1) est générée, laquelle est partiellement transmise du premier luminophore (L1) au deuxième luminophore (L2), cependant que l'énergie d'excitation du premier luminophore (L1) est générée
- directement par excitation optique sélective du premier luminophore (L1), et/ou
- par excitation optique du réseau hôte, puis transmission subséquente de l'énergie d'excitation du réseau hôte au premier luminophore (L1).
